(19) **Europäisches Patentamt / European Patent Office / Office européen des brevets**

(11) **EP 4 075 326 A1**

(12) # EUROPEAN PATENT APPLICATION
published in accordance with Art. 153(4) EPC

(43) Date of publication:
**19.10.2022 Bulletin 2022/42**

(21) Application number: **21856924.2**

(22) Date of filing: **29.06.2021**

(51) International Patent Classification (IPC):
**G06K 9/00** *(2022.01)*          **G06K 9/62** *(2022.01)*
**G06T 5/00** *(2006.01)*

(86) International application number:
**PCT/CN2021/103246**

(87) International publication number:
**WO 2022/179025 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.02.2021 CN 202110204094**

(71) Applicant: **Beijing Sensetime Technology
Development Co., Ltd.
Haidian Beijing 100080 (CN)**

(72) Inventor: **SU, Liu
Beijing 100080 (CN)**

(74) Representative: **DTS Patent- und Rechtsanwälte
Schnekenbühl und Partner mbB
Marstallstrasse 8
80539 München (DE)**

(54) **IMAGE PROCESSING METHOD AND APPARATUS, ELECTRONIC DEVICE, AND STORAGE MEDIUM**

(57)    The present disclosure relates to an image processing method and apparatus, an electronic device and a storage medium. The method includes: in response to a makeup operation on a facial image to be processed, generating, based on a selected first target material, a second target material matching a target part in the facial image to be processed; determining, based on the second target material, an image area in the facial image to be processed where the target part is located; and performing, based on a color of the second target material, a color fusion treatment on the image area where the target part is located, to obtain a fused facial image.

EP 4 075 326 A1

S11

In response to a makeup operation on a facial image to be processed, generating, based on a selected first target material, a second target material matching a target part in the facial image to be processed

S12

Determining, based on the second target material, an image area in the facial image to be processed where the target part is located

S13

Performing, based on a color of the second target material, a color fusion treatment on the image area where the target part is located, to obtain a fused facial image

Fig. 1

**Description**

**CROSS-REFERENCE TO RELATED APPLICATION**

This application claims priority of Chinese Patent Application entitled "Image Processing Method and Apparatus, Electronic Device and Storage Medium" filed on February 23, 2021, with the Application No. 202110204094.4, the entire contents of which are hereby incorporated by reference.

**TECHNICAL FIELD**

The present disclosure relates to the technical field of computer vision, and particularly to an image processing method and apparatus, an electronic device and a storage medium.

**BACKGROUND**

Beauty makeup can render, draw and arrange the face, facial features and other parts of the human body to enhance the stereoscopic impression, adjust the shape and color, cover up defects and show the spirits, so as to achieve a purpose of beautifying the visual impression. With the development of the computer vision technology, beauty makeup on a facial image has already being used widely in the life of people. Therefore, how to attain more natural makeup effect is an urgent problem to be solved at present.

**SUMMARY**

The present disclosure provides an image processing solution.

In one aspect of the present disclosure, there is provided an image processing method, comprising:
in response to a makeup operation on a facial image to be processed, generating, based on a selected first target material, a second target material matching a target part in the facial image to be processed; determining, based on the second target material, an image area in the facial image to be processed where the target part is located; and performing, based on a color of the second target material, a color fusion process on the image area where the target part is located, to obtain a fused facial image.

In a possible implementation, the method further includes: identifying the target part in the facial image to be processed to obtain an initial position of the target part in the facial image to be processed; wherein said generating, based on the selected first target material, the second target material matching the target part in the facial image to be processed comprises: fusing the selected first target material with a target part in a preset facial image to obtain a standard material image; and extracting the second target material from the standard material image based on the initial position.

In a possible implementation, said identifying the target part in the facial image to be processed to obtain the initial position of the target part in the facial image to be processed includes: acquiring at least one facial key point in the facial image to be processed; constructing in the facial image to be processed a triangular mesh corresponding to the target part based on the facial key point; and determining the initial position of the target part in the facial image to be processed based on position coordinates of the triangular mesh.

In a possible implementation, said determining, based on the second target material, the image area in the facial image to be processed where the target part is located includes: determining the image area in the facial image to be processed where the target part is located based on a transparency of at least one pixel in the second target material.

In a possible implementation, said determining the image area in the facial image to be processed where the target part is located based on the transparency of at least one pixel in the second target material includes: in response to the transparency of a pixel in the second target material being within a preset transparency range, adopting an area in the facial image to be processed corresponding to a position of the pixel as the image area where the target part is located.

In a possible implementation, said performing, based on the color of the second target material, the color fusion treatment on the image area where the target part is located to obtain the fused facial image includes: acquiring an original color of the target part; performing a first fusion of the original color and the color of the second target material based on a selected treatment type in the makeup operation to obtain an initial fused facial image, wherein a color of the target part in the initial fused facial image is an initial fused color; and performing a second fusion of the original color and the initial fused color to obtain the fused facial image.

In a possible implementation, the treatment type includes one or more of eye makeup treatment, blush treatment or eyebrow treatment; and said performing the first fusion of the original color and the color of the second target material based on the selected treatment type in the makeup operation to obtain the initial fused facial image includes: fusing the original color with the color of the second target material via multiply blend to obtain the initial fused facial image.

In a possible implementation, the treatment type includes a facial contouring treatment; and said performing the first fusion of the original color and the color of the second target material based on the selected treatment type in the makeup operation to obtain the initial fused facial image includes: fusing the original color with the color of the second target material via soft light to obtain the initial fused facial image.

In a possible implementation, said performing the second fusion of the original color and the initial fused color to obtain the fused facial image includes: determining respectively a fusing weight of the original color and a fusing weight of the initial fused color based on the transparency of at least one pixel in the second target material and a preset fusing intensity; and fusing the original color with and the initial fused color based on the respective fusing weights to obtain the fused facial image.

In a possible implementation, the first target material comprises one or more of an eyelash material, an eyeliner material, an eye shadow material, a blush material, an eyebrow material, or a facial contouring material.

In one aspect of the present disclosure, there is provided an image processing apparatus, including: a material generating module, configured to, in response to a makeup operation on a facial image to be processed, generate, based on a selected first target material, a second target material matching a target part in the facial image to be processed; a target part determining module, configured to determine, based on the second target material, an image area in the facial image to be processed where the target part is located; and a fusing module, configured to perform, based on a color of the second target material, a color fusion treatment on the image area where the target part is located, to obtain a fused facial image.

In a possible implementation, the apparatus is further configured to identify the target part in the facial image to be processed to obtain an initial position of the target part in the facial image to be processed; the material generating module is configured to fuse the selected first target material with a target part in a preset facial image to obtain a standard material image; and extract the second target material from the standard material image based on the initial position.

In a possible implementation, the apparatus is further configured to acquiring at least one facial key point in the facial image to be processed; construct in the facial image to be processed a triangular mesh corresponding to the target part based on the facial key point; and determine the initial position of the target part in the facial image to be processed based on position coordinates of the triangular mesh.

In a possible implementation, the target part determining module is configured to determine the image area in the facial image to be processed where the target part is located based on a transparency of at least one pixel in the second target material.

In a possible implementation, the target part determining module is further configured to, in response to the transparency of a pixel in the second target material being within a preset transparency range, adopting an area in the facial image to be processed corresponding to a position of the pixel as the image area where the target part is located.

In a possible implementation, the fusing module is configured to acquire an original color of the target part; perform a first fusion of the original color and the color of the second target material based on a selected treatment type in the makeup operation to obtain an initial fused facial image, wherein a color of the target part in the initial fused facial image is an initial fused color; and perform a second fusion of the original color and the initial fused color to obtain the fused facial image.

In a possible implementation, the treatment type includes one or more of an eye makeup treatment, a blush treatment or eyebrow treatment; and the fusing module is further configured to fuse the original color with the color of the second target material via multiply blend to obtain the initial fused facial image.

In a possible implementation, the treatment type includes a facial contouring treatment; and the fusing module is further configured to:
fuse the original color with the color of the second target material via soft light to obtain the initial fused facial image.

In a possible implementation, the fusing module is further configured to determine respectively a fusing weight of the original color and a fusing weight of the initial fused color based on the transparency of at least one pixel in the second target material and a preset fusing intensity; and fuse the original color with and the initial fused color based on the respective fusing weights to obtain the fused facial image.

In a possible implementation, the first target material includes one or more of an eyelash material, an eyeliner material, an eye shadow material, a blush material, an eyebrow material, or a facial contouring material.

According to an aspect of the present disclosure, there is provided an electronic device, which includes a processor and a memory storing processor executable instructions, wherein the processor is configured to execute the above image processing method.

According to an aspect of the present disclosure, there is provided a computer readable storage medium having computer program instructions stored thereon, wherein the computer program instructions, when executed by a processor, implement the above image processing method.

According to an aspect of the present disclosure, there is provided a computer program product, comprising computer readable codes, or a nonvolatile computer readable storage medium carrying computer readable codes, wherein when the computer readable codes run in a processor of an electronic device, the processor in the electronic device executes the image processing method.

In the embodiments of the present disclosure, in response to the makeup operation for the facial image to be processed, the second target material matching the target part in the facial image to be processed is generated based on the selected first target material; and the image area where the target part is located in the facial image to be processed is determined based on the second target material, so that the color fusion is performed on the image area where the target part is located based on the color of the second target material to obtain the fused image. Through the above process, on the one hand, the color fusion can be realized based on the second target material matching the target part in the facial image to be processed, so that the fused position is more accurate, and the fusion effect is more natural; and on the other hand, by performing the color fusion on the image area where the target part is located, it is possible to fuse the color in the target material while fully reserving the original color of the facial image to be processed, obtaining a fused facial image that is more realistic, has naturally-transitioned edges and is consistent with the original facial image to be processed, so that the fused color effect is more realistic, and the fused facial image is more natural.

It should be understood that the above general descriptions and the following detailed descriptions are only exemplary and illustrative, and do not limit the present disclosure. Other features and aspects of the present disclosure will become apparent from the following detailed descriptions of exemplary embodiments with reference to the accompanying drawings.

## BRIEF DESCRIPTION OF THE DRAWINGS

The drawings described here are incorporated into the specification and constitute a part of the specification. The drawings illustrate embodiments in conformity with the present disclosure and are used to explain the technical solutions of the present disclosure together with the specification.

FIG. 1 is a flow chart of an image processing method according to an embodiment of the present disclosure.
FIG. 2 is a schematic diagram of a first target material according to an embodiment of the present disclosure.
FIG. 3 is a schematic diagram of a first target material according to an embodiment of the present disclosure.
FIG. 4 is a schematic diagram of a first target material according to an embodiment of the present disclosure.
FIG. 5 is a schematic diagram of a first target material according to an embodiment of the present disclosure.
FIG. 6 is a schematic diagram of a first target material according to an embodiment of the present disclosure.
FIG. 7 is a schematic diagram of a first target material according to an embodiment of the present disclosure.
FIG. 8 is a schematic diagram of a triangular mesh constructed according to an embodiment of the present disclosure.
FIG. 9 is a schematic diagram of a preset facial image according to an embodiment of the present disclosure.
FIG. 10 is a schematic diagram of a fused facial image according to an embodiment of the present disclosure.
FIG. 11 is a schematic diagram of a fused facial image according to an embodiment of the present disclosure.
FIG. 12 is a schematic diagram of a fused facial image according to an embodiment of the present disclosure.
FIG. 13 is a schematic diagram of a fused facial image according to an embodiment of the present disclosure.
FIG. 14 is a block diagram of an image processing apparatus according to an embodiment of the present disclosure.
FIG. 15 is a schematic diagram of an application example according to an embodiment of the present disclosure.
FIG. 16 is a block diagram of an electronic device according to an embodiment of the present disclosure.
FIG. 17 is a block diagram of an electronic device according to an embodiment of the present disclosure.

## DETAILED DESCRIPTION

Various exemplary embodiments, features and aspects of the present disclosure are described in detail below with reference to the accompanying drawings. Reference numerals in the drawings refer to elements with same or similar functions. Although various aspects of the embodiments are illustrated in the drawings, the drawings are unnecessary to draw to scale unless otherwise specified.

The term "exemplary" herein means "using as an example and an embodiment or being illustrative". Any embodiment described herein as "exemplary" should not be construed as being superior or better than other embodiments.

Herein the term "and/or" describes a relation between associated objects and indicates three possible relations. For example, the phrase "A and/or B" indicates a case where only A is present, a case where A and B are both present, and a case where only B is present. In addition, the term "at least one" herein indicates any one of a plurality or a random combination of at least two of a plurality. For example, including at least one of A, B and C means including any one or more elements selected from a group consisting of A, B and C.

Furthermore, for better describing the present disclosure, numerous specific details are illustrated in the following detailed description. Those skilled in the art should understand that the present disclosure may be implemented without certain specific details. In some examples, methods, means, elements and circuits that are well known to those skilled in the art are not described in detail in order to highlight the main idea of the present disclosure.

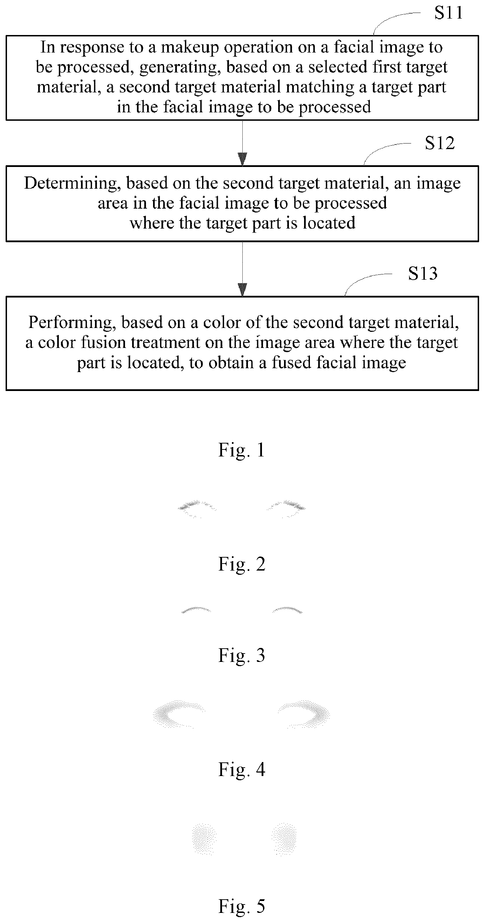

FIG. 1 is a flow chart of an image processing method according to an embodiment of the present disclosure. The method may be applied to an image processing apparatus or an image processing system. The image processing apparatus may be a terminal device, a server or other processing devices, etc. The terminal device may be user equipment (UE), a mobile device, a user terminal, a terminal, a cellular phone, a cordless telephone, a personal digital assistant (PDA), a handheld device, a computing device, a vehicle-mounted device, a wearable device, etc. In an example, the image processing method may be applied to a cloud server or a local server; and the cloud server may be a public cloud server and may also be a private cloud server, which may be selected flexibly based on the actual situation.

In possible implementation, the image processing method may also be implemented by a processor calling computer readable instructions stored in a memory.

As shown in FIG. 1, in a possible implementation, the image processing method may include:

Step S11: in response to a makeup operation on a facial image to be processed, generating, based on a selected first target material, a second target material matching a target part in the facial image to be processed.

The facial image to be processed may be any image containing a face. The facial image to be processed may contain a single face or a plurality of faces, which may be implemented flexibly based on the actual situation, which is not limited in the embodiments of the present disclosure.

The operation content contained in the makeup operation for the facial image to be processed may be determined flexibly based on the actual situation, which is not limited to the following disclosed embodiments. In a possible implementation, the makeup operation may include an operation of indicating to perform a makeup treatment on the facial image to be processed; in a possible implementation, the makeup operation may also include an operation of selecting the first target material for the makeup treatment; and in a possible implementation, the makeup operation may also include an operation of indicating a makeup treatment type.

The makeup treatment type may be determined flexibly based on the actual situation. The makeup treatment type may include a single treatment type or a variety of treatment types. In a possible implementation, the makeup treatment type may include one or more of an eye makeup treatment, a blush treatment, an eyebrow treatment or a facial contouring treatment.

The first target material may be a related material for implementing the beauty makeup for the facial image to be processed. The first target material may be implemented flexibly based on the makeup treatment type. In a possible implementation, the first target material may include one or more of an eyelash material, an eyeliner material or an eye shadow material for the eye makeup treatment; in a possible implementation, the first target material may also include one or more of a blush material for the blush treatment, an eyebrow material for the eyebrow treatment or a facial contouring material for the facial contouring treatment. The first target material may be selected flexibly based on the actual situation, which is not limited to the following disclosed embodiments.

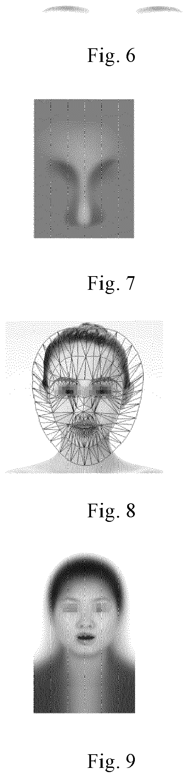

FIG. 2-FIG. 7 are a schematic diagrams of a first target material according to an embodiment of the present disclosure. As shown in FIG. 2-FIG. 7, in possible implementation, the first target material may take various forms, such as the eyelash material shown in FIG. 2, the eyeliner material shown in FIG. 3, the eye shadow material shown in FIG. 4, the blush material shown in FIG. 5, the eyebrow material shown in FIG. 6 and the facial contouring material shown in FIG. 7, etc. With the first target material in various forms, various forms of beauty makeup may be performed on the facial image to be processed, thereby improving the comprehensiveness and flexibility of the image processing.

The first target material of the same kind may also include various forms or various colors. For example, the eyelash material may include an eyelash in various shapes; the blush material may include a blush in various shapes or various colors, which is not limited to the subsequently disclosed embodiments. Therefore, in a possible implementation, it is possible to generate a second target material matching the target part in the facial image to be processed based on the selected first target material in the makeup operation through the step S11.

The target part may be any part in the facial image to be processed which needs the beauty makeup. The parts included in the target part may also be determined flexibly based on the makeup treatment type. In a possible implementation, in a case where the treatment type includes the eye makeup treatment, the target part may include an eye part, and the eye part may include one or more of eye lashes, eye balls, eyelids, etc.; in a possible implementation, in a case where the treatment type includes the blush treatment, the target part may include a cheek part; in a possible implementation, in a case where the treatment type includes the eyebrow treatment, the target part may include an eyebrow part; and in a possible implementation, in a case where the treatment type includes the facial contouring treatment, the target part may include related parts of facial contouring such as two side parts of a nose, a forehead part, a part below the cheekbone, etc.

The second target material may be a target material generated based on the first target material and matching the target part in the facial image to be processed. The second target material may match the target part in the facial image to be processed in terms of position or match the target part in the facial image to be processed in terms of shape.

The generation of the second target material may be determined flexibly based on the actual situation, which is detailed in the subsequently disclosed embodiments and is not detailed here.

Step S12: determining, based on the second target material, an image area in the facial image to be processed where the target part is located.

As described in the above disclosed embodiment, the second target material may be a material matching the target part. Therefore, in a possible implementation, the range of the area where the target part is located in the facial image to be processed may be further corrected based on the second target material to obtain a more accurate position of the target part. Therefore, by the step S12, it is possible to determine the image area where the target part is located in the facial image to be processed based on the second target material.

The step S12 may be implemented flexibly based on the actual situation. For example, the image area where the target part is located in the facial image to be processed may be determined based on the transparency of each pixel in the second target material, which is detailed in the following disclosed embodiments and is not detailed here.

Step S13: performing based on a color of the second target material, a color fusion treatment on the image area where the target part is located, to obtain a fused facial image.

The process of performing a color fusion on the image area where the target part is located may be determined flexibly according to the actual situation, which is not limited to the following disclosed embodiments. In a possible implementation, the color fusion may be performed on the image area where the target part is located in one or more manners according to the color of the second target material, so that the fused color is more realistic.

The one or more color fusion manners are not specified in the embodiments of the present disclosure and may be selected flexibly according to the actual situation. The fusion manners for fusing multiple colors may be the same or different. In some possible implementations, the fusion manner of multiple colors may include one or more of multiply blend, soft light, direct superimposition or weighting superimposition. In some possible implementations, the original color of the target part may be fused with the color of the second target material via multiply blend or a soft light way, and the fused color is used as an initial fused color to be fused again with the original color of the target part in the superimposition or weighting superimposition way to obtain the fused facial image, thereby improving the realness of the fused color in the fused facial image.

The step S13 may be implemented in a different manner according to different color fusion manners, which is detailed in the following disclosed embodiments and is not detailed here.

In the embodiments of the present disclosure, the second target material matching the target part in the facial image to be processed is generated according to the selected first target material in response to the makeup operation for the facial image to be processed, and the image area where the target part is located in the facial image to be processed is determined according to the second target material, so that the color fusion is performed on the image area where the target part is located according to the color of the second target material to obtain the fused image. Through the above process, on the one hand, the color fusion can be realized according to the second target material matching the target part in the facial image to be processed, so that the fused position is more accurate, and the fusion effect more natural; and on the other hand, the fused color effect is more realistic by performing the color fusion on the image area where the target part is located, obtaining a more natural fused facial image.

In a possible implementation, the method provided by the embodiments of the present disclosure may further include: identifying the target part in the facial image to be processed to obtain an initial position of the target part in the facial image to be processed.

The initial position may be an approximate position of the target part in the facial image to be processed determined according to the facial image to be processed. The method for determining the initial position of the target part is not limited in the embodiments of the present disclosure and may be selected flexibly according to the actual situation, which is not limited to the following disclosed embodiments.

In a possible implementation, the initial position of the target part is determined by identifying a key point of the target part. For example, the initial position may be determined according to a coordinate of the identified key point of the target part in the facial image to be processed; or a range of the target part in the facial image to be processed is determined according to the identified key point of the target part so as to obtain the initial position of the target part.

In a possible implementation, the identifying the target part in the facial image to be processed to obtain the initial position of the target part in the facial image to be processed may include:

acquiring at least one facial key point in the facial image to be processed;
constructing in the facial image to be processed a triangular mesh corresponding to the target part based on the facial key point; and
determining the initial position of the target part in the facial image to be processed based on a position coordinate of the triangular mesh.

The facial key point may be related key points for positioning the position of a key area in the facial image, such as an eye key point, a mouth key point, an eyebrow key point or a nose key point, etc. The specific key points included in the acquired facial key point and the number of the included key points are not limited in the embodiments of the present disclosure and may be selected flexibly according to the actual situation. In some possible implementations, all related key points in the facial image to be processed may be acquired, and the number of the acquired key points may be between 100 and 300. For example, 106 whole facial key points (Face 106) of the face may be included, or 240 or 282 facial key points may be included. In some possible implementations, a part of key points in the facial image to be processed, such as the key points related to the target part, may be acquired. For example, in a case where the target part is the eye, the key points of eye corners and eye balls may be acquired as the facial key points.

The method for acquiring the facial key point is not limited in the embodiments of the present disclosure. Any method enabling identifying the facial key points in the image may be used as the implementation for acquiring the facial key point.

After at least one facial key point is acquired, a triangular mesh may be constructed in the facial image to be processed according to the facial key point. The method for constructing the triangular mesh is not limited in the embodiments of the present disclosure. In a possible implementation, every three adjacent points of the acquired facial key points may be connected to obtain a plurality of triangular meshes. In some possible implementations, interpolation may be first performed according to the acquired facial key point to obtain an interpolating point, and then every three adjacent points in a point set formed by the facial key point and the interpolating point together may be connected to obtain a plurality of triangular meshes.

FIG. 8 is a schematic diagram of a triangular mesh constructed according to an embodiment of the present disclosure (in order to protect the target in the image, some parts of the face in the image are processed with mosaics). It can be seen from FIG. 8 that in a possible implementation, the facial key point and the interpolating point in the facial image to be processed are connected to a plurality of triangular meshes.

In a possible implementation, the triangular mesh corresponding to the target part may also be constructed in the facial image to be processed according to the facial key point. The method for constructing the triangular mesh may refer to the above disclosed embodiments, merely with the difference that facial key point and interpolating point related to the target part are acquired to construct the triangular mesh corresponding to the target part, saving the construction of the triangular meshes of the other parts in the facial image to be processed.

After the triangular mesh corresponding to the target part is obtained, the initial position of the target part in the facial image to be processed may be determined according to a position coordinate of the triangular mesh in the facial image to be processed. of the expression of the initial position is not limited in the embodiments of the present disclosure. In a possible implementation, a center point of one or more triangular meshes corresponding to the target part may be used as the initial position of the target part; in a possible implementation, coordinates of each vertex of one or more triangular meshes corresponding to the target part may be used as the initial position of the target part, which may be selected flexibly according to the actual situation.

By the process of acquiring at least one facial key point in the facial image to be processed, constructing in the facial image to be processed a triangular mesh corresponding to the target part based the facial key point, and determining the initial position of the target part in the facial image to be processed based on a position coordinate of the triangular mesh, it is possible to efficiently and accurately primarily locate the part of the target part in the facial image to be processed by key point identification and mesh construction, so that it becomes convenient to obtain the second target material matching the target part subsequently, thereby improving the image processing accuracy and realness.

In a possible implementation, the step S11 may include:

fusing the selected first target material with a target part in a preset facial image to obtain a standard material image; and
extracting the second target material from the standard material image based on the initial position.

The preset facial image may be a standard facial image template, and may include a complete face part, and the position of each face part in the preset facial image is standard. The preset facial image may be implemented flexibly according to the actual situation; the preset facial image may be any standard face adopted in the field of facial image processing. FIG. 9 is a schematic diagram of a preset facial image according to an embodiment of the present disclosure (like in the foregoing embodiment, in order to protect the target in the image, some parts of the face in the image are processed with mosaics). It can be seen from FIG. 9 that in an example, the face part contained in the preset facial image is clear and complete and conforms to the objective distribution of each face part on the face.

Because the position of each face part in the standard facial image is standard, the first target material may be fused directly with the position corresponding to the target part in the preset facial image to obtain the standard material image. The method for fusing the first target material with the target part in the preset facial image is not limited in the embodiments of the present disclosure; in a possible implementation, the first target material may be superimposed directly with pixel values of corresponding pixels in the target part in the preset facial image to obtain the standard material image; and in some possible implementations, the first target material may be fused with the pixel values of the corresponding pixels in the target part in the preset facial image by weighting superimposition according to a preset weight.

The standard material image may be obtained by fusing the selected first target material with the target part in the preset facial image. In a possible implementation, the second target material may be extracted from the standard material image based on the initial position in the above various disclosed embodiments.

In a possible implementation, the method for extracting the second target material based on the initial position may include: acquiring a color value and transparency of each pixel in the range corresponding to the initial position in the standard material image, and using an image composed of a plurality of pixels having the color value and the transparency as the second target material.

By the process of fusing the selected first target material with a target part in a preset facial image to obtain a standard material image, and extracting the second target material from the standard material image based on the initial position, on the one hand, the realness of the fused facial image obtained subsequently is improved because the second target material for a subsequent fusion is a material that is more realistic as having been fused with the preset facial image; and on the other hand, because the initial position is obtained by identifying the target part in the facial image to be processed, the extracted second target material may be better fused with the position area of the target part in the facial image to be processed, thereby further improving the realness of the fused facial image.

In a possible implementation, the step S12 may include: determining the image area in the facial image to be processed where the target part is located based on a transparency of at least one pixel in the second target material.

After the second target material matching the target part in the facial image to be processed is determined, the facial image to be processed may be sampled based on the second target material to determine the image area where the target part is located in the facial image to be processed. In a possible implementation, the image area where the target part is located may be an area in the facial image to be processed corresponding to a position of a pixel in the second target material. In a possible implementation, the pixels in some positions in the facial image to be processed may be screened according to the transparency of at least one pixel in the second target material so as to determine a more accurate image area where the target part is located.

By the process of determining the image area in the facial image to be processed where the target part is located based on transparency of at least one pixel in the second target material, it is possible to more accurately locate the image area where the target part is located in the facial image to be processed, so that the accuracy of the fused facial image obtained subsequently can be improved.

In a possible implementation, the determining the image area in the facial image to be processed where the target part is located based on transparency of at least one pixel in the second target material may include:

in response to the transparency of a pixel in the second target material being within a preset transparency range, adopting an area in the facial image to be processed corresponding to a position of the pixel as the image area where the target part is located .

The specific value of the preset transparency range may be determined flexibly according to the actual situation; in a possible implementation, the preset transparency range may be set to be less than 100%, that is, in a case where the transparency of the pixel in the second target material is less than 100% (not completely transparent), an area in the facial image to be processed corresponding to the position of the pixel may be used as the image area where the target part is located; and in a possible implementation, the preset transparency range may be set to be less than other transparency values, or within a transparency range, and the like, the value of the preset transparency range is not limited in the embodiments of the present disclosure.

By the process of adopting the area in the facial image to be processed corresponding to a position of the pixel as the image area where the target part is located in response to the transparency of the pixel in the second target material being within a preset transparency range, it is possible to determine the image area where the target part meeting the requirement more pertinently by setting the value of the preset transparency range, so that the determined image area is more realistic and reliable, and the realness and accuracy of the obtained fused facial image can be further improved.

In a possible implementation, the step S13 may include:

acquiring an original color of the target part;
performing a first fusion on the original color and the color of the second target material according to a selected treatment type in the makeup operation to obtain an initial fused facial image, wherein the color of the target part in the initial fused facial image is an initial fused color; and
performing a second fusion on the original color and the initial fused color to obtain the fused facial image.

The original color of the target part is the color of the target part in the facial image to be processed. In a possible implementation, the first fusion may be performed on the original color and the color of the second target material according to the selected treatment type in the makeup operation to obtain the initial fused facial image.

Performing a first fusion on the original color and the color of the second target material may be performed by respectively performing the first fusion on the original color of each pixel in the facial image to be processed and the color of a pixel in the second target material in a corresponding position to obtain the initial fused facial image. The method of the first fusion is not specified in the embodiments of the present disclosure and may vary flexibly according to different treatment types, which is detailed in the subsequently disclosed embodiments and is not detailed here.

The color of each pixel in the initial fused facial image after the first fusion may be the initial fused color. In a possible implementation, the second fusion may be performed on the original color of a plurality of pixels in the facial image to be processed and the initial fused color of the pixel in the initial fused facial image in the corresponding position to obtain the fused facial image. The method of the second fusion may also refer to the subsequently disclosed embodiments and is not detailed here.

By the process of performing a first fusion on the original color and the color of the second target material to obtain the initial fused facial image having the color of the initial fused color, and further performing a second fusion on the initial fused color and the original color in the facial image to be processed to obtain the fused facial image, with two fusions, the color in the target material is fused while fully reserving the original color in the facial image to be processed, thereby obtaining a fused facial image that is more realistic, has naturally-transitioned edges and is consistent with the original facial image to be processed.

As described in the above disclosed embodiments, according to different selected treatment types in the makeup operation, the method of the first fusion may also vary flexibly. In a possible implementation, the performing the first fusion on the original color and the color of the second target material based on a selected treatment type in the makeup operation to obtain an initial fused facial image may include:

fusing the original color with the color of the second target material via multiply blend to obtain the initial fused facial image.

In the process of fusing the original color with the color of the second target material via multiply blend, the original color and the color of the second target material may serve as two layers and may be mixed by multiplication, so that the color of the two layers may be darkened in a smooth nonlinear manner.

In an example, the fusion process via multiply blend is expressed by the following formula (1):

$$C = \frac{A \times B}{255} \tag{1}$$

where A is the color of the second target material, B is the original color, and C is the color in the initial fused facial image.

By fusing the original color with the color of the second target material via multiply blend, it is possible to reduce the overflow of color gradation in the fusing process, and to conceal the mottled background in the obtained initial fused facial image, so that the obtained initial fused facial image has a better image effect.

In a possible implementation, the performing a first fusion on the original color and the color of the second target material based on a selected treatment type in the makeup operation to obtain an initial fused facial image may include:

fusing the original color with the color of the second target material via soft light to obtain the initial fused facial image.

In the process of fusing the original color with the color of the second target material via soft light, whether the fused color is brightened or darkened may be determined according to a degree of light and shade of the color of the second target material; in a case where the color of the second target material is brighter than the preset color, the obtained initial fused facial image is brightened; and in a case where the color of the second target material is darker than the preset color, the obtained initial fused facial image is brightened. The preset color may be set flexibly according to the actual situation. In an example, the preset color may be neutral gray (50% gray).

In an example, the fusion process via soft light may be expressed by the following formula (2):

$$C = \begin{cases} (2 \times A - 1) \times (B - B \times B) + B, & A \leq 0.5 \\ (2 \times A - 1) \times (\sqrt{B} - B) + B, & A > 0.5 \end{cases} \tag{2}$$

where A is the color of the second target material, B is the original color, and C is the color in the initial fused facial image.

By fusing the original color with the color of the second target material via soft light, it is possible to adjust the light-shade effect of the obtained initial fused facial image according to the color of the second target material, so that the obtained initial fused facial image is more natural and has a better image effect.

In a possible implementation, the performing the second fusion on the original color and the initial fused color to obtain the fused facial image may include:

determining respectively a fusing weight of the original color and a fusing weight of the initial fused color based on the transparency of at least one pixel in the second target material and a preset fusing intensity; and fusing the original color with and the initial fused color based on the respective fusing weights to obtain the fused facial image.

The preset fusing intensity is used to indicate the respective fusing weight of the original color and initial fused color in the fusing process; its numeric value may be set flexibly according to the actual situation. In a possible implementation, the fusing weights of the original color and the initial fused color may be preset as the preset fusing intensity; and in a possible implementation, the makeup operation for the facial image to be processed may include selecting an intensity for the fusing intensity, in which case the fusing intensity selected in the makeup operation may preset as the fusing intensity.

In some possible implementations, besides determining the fusing weights of the original color and the initial fused color according to the preset fusing intensity, the fusing weight of each pixel may also be determined respectively by combining the transparency of a plurality of pixels in the second target material with the preset fusing intensity. For example, in some possible implementations, in a case where the transparency of a pixel in the second target material is within a transparency range such as between 75% and 100%, the fusing weight of the initial fused color of the pixel may be set in a certain range such as between 0 and 15%. The specific range or value and the like of the transparency and the fusing weight may be set flexibly according to the actual situation and are not limited to various embodiments of the present disclosure. In an example, in a case where the transparency of a pixel in the second target material is 100%, it may be considered that the pixel is not shown in the image after the fusion; therefore, the fusing weight of the initial fused color of the pixel may be 0. The correspondence between the fusing weight and the transparency and the preset fusing intensity may be set flexibly according to the actual situation, which is not limited in the embodiments of the present disclosure.

After the fusing weight is determined, the original color may be fused with the initial fused color based on the corresponding fusing weight to obtain the fused facial image, wherein in the process of fusion based on the fusing weight, the fusion may be performed directly by superimposition, or in some other ways. For example, the fusion may be performed via multiply blend or soft light as proposed in the above disclosed embodiments. The specific fusion method is not limited in the embodiments of the present disclosure.

By the process of respectively determining a fusing weight of the original color and a fusing weight of the initial fused color based on a transparency of at least one pixel in the second target material and a preset fusing intensity, and fusing the original color with and the initial fused color based on the respective fusing weights to obtain the fused facial image, it is possible to flexibly set the preset fusing intensity based on the actual needs, so as to obtain a fused facial image with a fusing intensity and an effect meeting the requirement, thereby improving the image processing flexibility.

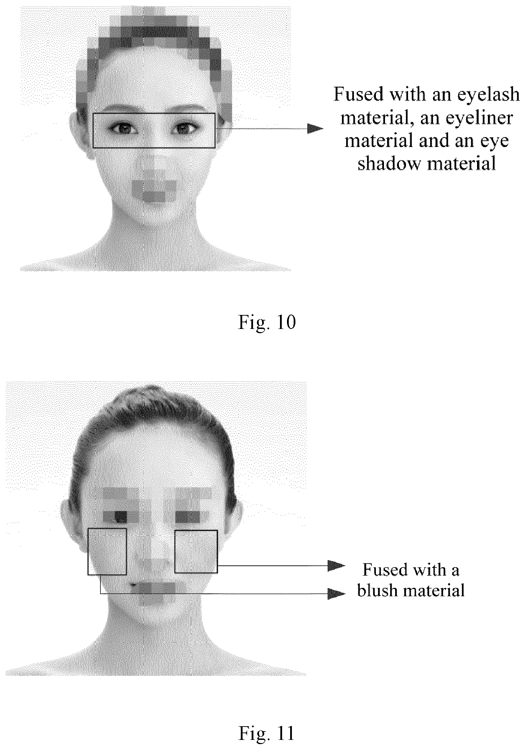

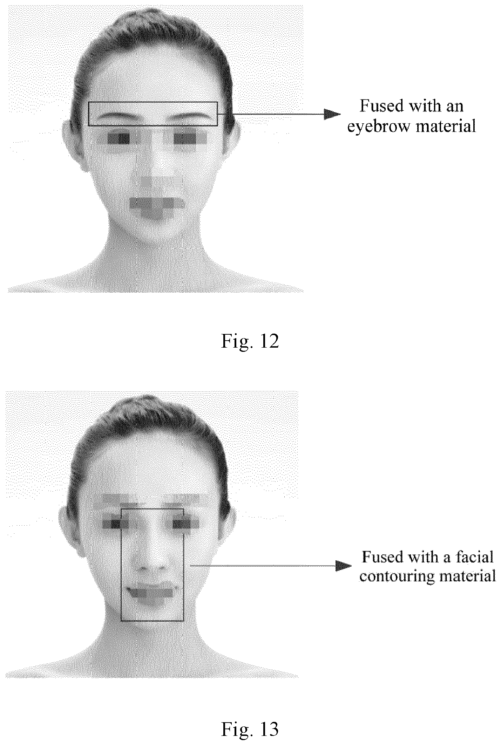

Based on different selected first target materials, the finally obtained fused facial image may vary flexibly. FIG. 10-FIG. 13 illustrate a schematic diagram of a fused facial image according to an embodiment of the present disclosure (like the above disclosed embodiments, in order to protect the target in the image, some parts of the face in the image are processed with mosaics). FIG. 10 shows a fused facial image fused with an eyelash material, an eyeliner material and an eye shadow material; FIG. 11 is a fused facial image fused with a blush material; FIG. 12 is a fused facial image fused with an eyebrow material; and FIG. 13 is a fused facial image fused with a facial contouring material. It can be seen from these images that by the image processing method provided by various disclosed embodiments, it is possible to obtain a fused facial image that is realistic and has good fusion effect.

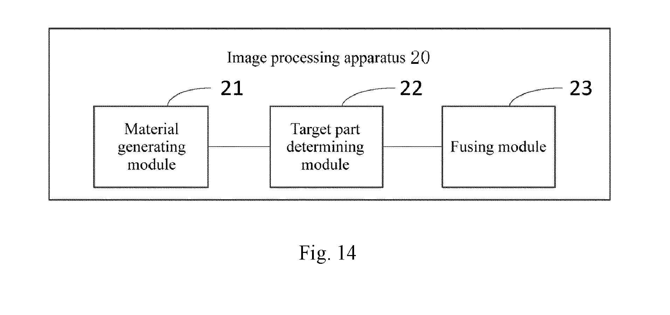

FIG. 14 is a block diagram of an image processing apparatus according to an embodiment of the present disclosure. As shown in FIG. 14, the image processing apparatus 20 may include:

a material generating module 21, configured to generate a second target material matching a target part in a facial image to be processed based on a selected first target material in response to a makeup operation for the facial image to be processed;

a target part determining module 22, configured to determine an image area where the target part is located in the facial image to be processed based on the second target material; and

a fusing module 23, configured to perform a color fusion on the image area where the target part is located based on a color of the second target material to obtain a fused facial image.

In a possible implementation, the apparatus is further configured to identify the target part in the facial image to be processed to obtain an initial position of the target part in the facial image to be processed; the material generating module is configured to fuse the selected first target material with a target part in a preset facial image to obtain a standard material image, and extract the second target material from the standard material image based on the initial position.

In a possible implementation, the apparatus is further configured to acquire at least one facial key point in the facial image to be processed, construct a triangular mesh corresponding to the target part in the facial image to be processed based on the facial key point, and determine the initial position of the target part in the facial image to be processed based on a position coordinate of the triangular mesh.

In a possible implementation, the target part determining module is configured to determine the image area where the target part is located in the facial image to be processed based on transparency of at least one pixel in the second target material.

In a possible implementation, the target part determining module is further configured , in a case where the transparency of a pixel in the second target material is within a preset transparency range, to adopt an area in the facial image to be processed corresponding to a position of the pixel as the image area where the target part is located.

In a possible implementation, the fusing module is configured to acquire an original color of the target part, perform a first fusion on the original color and the color of the second target material based on a selected treatment type in the makeup operation to obtain an initial fused facial image, wherein the color of the target part in the initial fused facial image is an initial fused color, and perform a second fusion on the original color and the initial fused color to obtain a fused facial image.

In a possible implementation, the treatment type includes one or more of an eye makeup treatment, a blush treatment, or an eyebrow treatment; and the fusing module is further configured to fuse the original color with the color of the second target material via multiply blend to obtain the initial fused facial image.

In a possible implementation, the treatment type includes facial contouring treatment; and the fusing module is further configured to fuse the original color with the color of the second target material via soft light to obtain the initial fused facial image.

In a possible implementation, the fusing module is further configured to respectively determine a fusing weight of the original color and a fusing weight of the initial fused color based on a transparency of at least one pixel in the second target material and a preset fusing intensity, and fuse the original color with and the initial fused color based on the respective fusing weights to obtain the fused facial image.

In a possible implementation, the first target material includes one or more of an eyelash material, an eyeliner material, an eye shadow material, a blush material, an eyebrow material, or a facial contouring material.

**Example of application**

In the computer vision field, how to obtain a more realistic beauty image becomes an urgent problem to be solved.

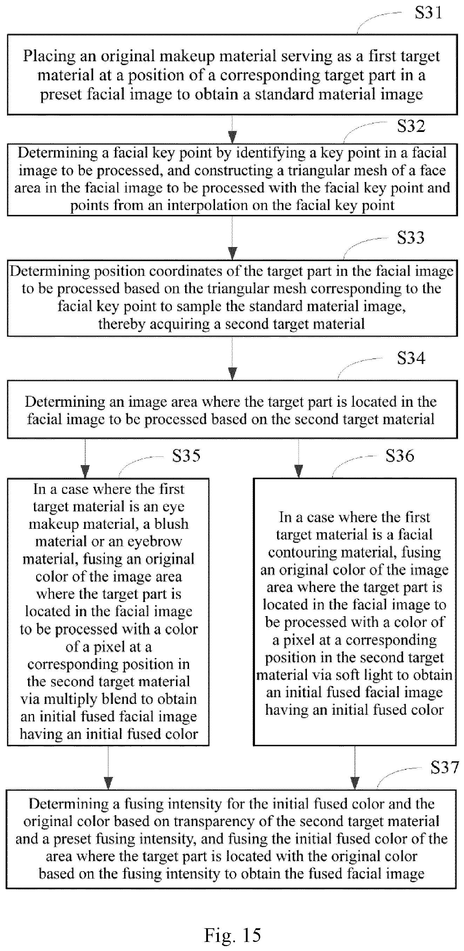

FIG. 15 is a schematic diagram of an application example according to the present disclosure. As shown in FIG. 15, an example of application of the present disclosure proposes an image processing method, comprising steps of:

Step S31: placing an original makeup material (as shown in FIG. 2-FIG. 7) serving as a first target material at a position of a corresponding target part in a preset facial image as shown in FIG. 9 (for example, the blush in FIG. 5 is arranged in a face area of the standard face, and the eye makeup in FIG. 2-FIG. 4 is arranged in an eye area of the standard face) to obtain a standard material image;

Step S32: determining a facial key point by identifying a key point in a facial image to be processed, and constructing a triangular mesh of a face area in the facial image to be processed as shown in FIG. 8 with the facial key point and points from an interpolation on the facial key point;

Step S33: determining position coordinates of the target part in the facial image to be processed based on the triangular mesh corresponding to the facial key point to sample the standard material image, thereby acquiring a second target material;

Step S34: determining an image area where the target part is located in the facial image to be processed based on the second target material;

Step S35: in a case where the first target material is an eye makeup material, a blush material or an eyebrow material, fusing an original color of the image area where the target part is located in the facial image to be processed with a color of a pixel at a corresponding position in the second target material via multiply blend to obtain an initial fused facial image having an initial fused color;

Step S36: in a case where the first target material is a facial contouring material, fusing an original color of the image area where the target part is located in the facial image to be processed with a color of a pixel at a corresponding position in the second target material via soft light to obtain an initial fused facial image having an initial fused color; and

Step S37: determining a fusing intensity for the initial fused color and the original color based on transparency of the second target material and a preset fusing intensity, and fusing the initial fused color of the area where the target part is located with the original color based on the fusing intensity to obtain the fused facial image as shown in FIG. 10-FIG. 13.

By the method provided by the example of application of the present disclosure, by performing a color fusion twice, it is possible to obtain a fused facial image that is more realistic, has naturally-transitioned edges and meets the requirements of the user.

Besides the application of makeup operation for a facial image, the image processing method provided in the example of application of the present disclosure may also be applied to other types of images such as an image of a human body or an image of landscape; based on different image types, the image processing method provided by the example of application of the present disclosure may be developed and modified flexibly.

It is appreciated that the above method embodiments described in the present disclosure may be combined with one another to form combined embodiments without departing from principles and logics, which are not repeated in the present disclosure due to limited space.

It will be appreciated by those skilled in the art that in the above method of the specific implementation, the writing order of each step does not mean a strict execution order to constitute any limitation to the implementation process, and the specific execution order of each step should be determined by the functions and possible internal logics.

An embodiment of the present disclosure further provides a computer readable storage medium having computer program instructions stored thereon, wherein the computer program instructions, when executed by a processor, implement the above method. The computer readable storage medium may be a volatile computer readable storage medium or non-volatile computer readable storage medium.

An embodiment of the present disclosure further provides an electronic device, which includes a processor and a memory configured to store processor executable instructions, wherein the processor is configured to execute the above method.

An embodiment of the present disclosure further provides a computer program, comprising computer readable codes, or a nonvolatile computer readable storage medium carrying the computer readable codes, wherein when the computer readable codes run in a processor of an electronic device, the processor in the electronic device executes the method.

In actual applications, the memory may be a volatile memory, such as RAM, or a non-volatile memory such as ROM, a flash memory, a hard disk drive (HDD) or a solid-state drive (SSD) or a combination of the memories and provides instructions and data for the processor.

The processor may be at least one of ASIC, DSP, DSPD, PLD, FPGA, CPU, a controller, a micro controller and a microprocessor. It should be understood that for different devices, the electronic device for implementing the processor function may be other devices, which is not limited specifically in the embodiments of the present disclosure.

The electronic device may be provided as a terminal, a server or a device in any other form.

Based on the technical concept the same as the above embodiments, an embodiment of the present disclosure also provides a computer program. The computer program implements the above method when being executed by the processor.

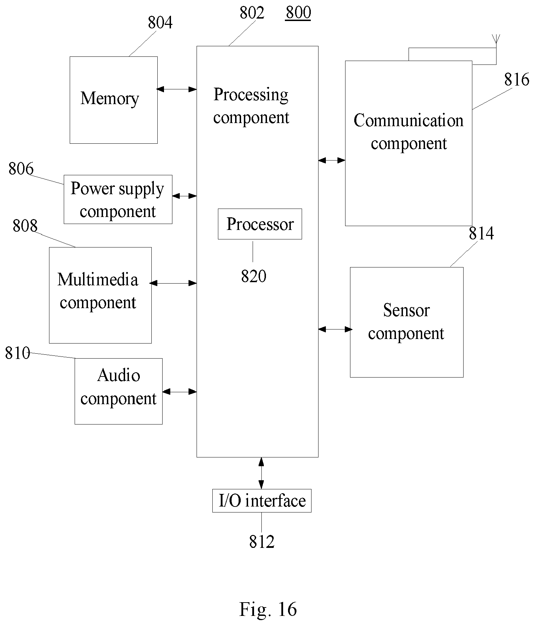

FIG. 16 is a block diagram of an electronic device 800 according to an embodiment of the present disclosure. For example, the electronic device 800 may be a mobile phone, a computer, a digital broadcast terminal, a message transceiver, a game console, a tablet device, medical equipment, fitness equipment, a personal digital assistant or any other terminal.

Referring to FIG. 16, the electronic device 800 may include one or more of the following components: a processing component 802, a memory 804, a power supply component 806, a multimedia component 808, an audio component 810, an input/output (I/O) interface 812, a sensor component 814 and a communication component 816.

The processing component 802 generally controls the overall operation of the electronic device 800, such as operations related to display, phone call, data communication, camera operation and record operation. The processing component 802 may include one or more processors 820 to execute instructions so as to complete all or some steps of the above method. Furthermore, the processing component 802 may include one or more modules for interaction between the processing component 802 and other components. For example, the processing component 802 may include a multimedia module to facilitate the interaction between the multimedia component 808 and the processing component 802.

The memory 804 is configured to store various types of data to support the operations of the electronic device 800. Examples of these data include instructions for any application or method operated on the electronic device 800, contact data, telephone directory data, messages, pictures, videos, etc. The memory 804 may be any type of volatile or non-volatile storage devices or a combination thereof, such as static random access memory (SRAM), electronic erasable programmable read-only memory (EEPROM), erasable programmable read-only memory (EPROM), read-only memory (ROM), a magnetic memory, a flash memory, a magnetic disk or a compact disk.

The power supply component 806 supplies electric power to various components of the electronic device 800. The power supply component 806 may include a power supply management system, one or more power supplies, and other components related to the power generation, management and allocation of the electronic device 800.

The multimedia component 808 includes a screen providing an output interface between the electronic device 800 and a user. In some embodiments, the screen may include a liquid crystal display (LCD) and a touch panel (TP). If the screen includes the touch panel, the screen may be implemented as a touch screen to receive an input signal from the user. The touch panel includes one or more touch sensors to sense the touch, sliding, and gestures on the touch panel. The touch sensor may not only sense a boundary of the touch or sliding action, but also detect the duration and pressure related to the touch or sliding operation. In some embodiments, the multimedia component 808 includes a front camera and/or a rear camera. When the electronic device 800 is in an operating mode such as a shooting mode or a video mode, the front camera and/or the rear camera may receive external multimedia data. Each front camera and rear camera may be a fixed optical lens system or have a focal length and optical zooming capability.

The audio component 810 is configured to output and/or input an audio signal. For example, the audio component 810 includes a microphone (MIC). When the electronic device 800 is in the operating mode such as a call mode, a record mode and a voice identification mode, the microphone is configured to receive the external audio signal. The received audio signal may be further stored in the memory 804 or sent by the communication component 816. In some embodiments, the audio component 810 also includes a loudspeaker which is configured to output the audio signal.

The I/O interface 812 provides an interface between the processing component 802 and a peripheral interface module. The peripheral interface module may be a keyboard, a click wheel, buttons, etc. These buttons may include but are not limited to home buttons, volume buttons, start buttons and lock buttons.

The sensor component 814 includes one or more sensors which are configured to provide state evaluation in various aspects for the electronic device 800. For example, the sensor component 814 may detect an on/off state of the electronic device 800 and relative positions of the components such as a display and a small keyboard of the electronic device 800. The sensor component 814 may also detect the position change of the electronic device 800 or a component of the electronic device 800, presence or absence of a user contact with electronic device 800, directions or acceleration/deceleration of the electronic device 800 and the temperature change of the electronic device 800. The sensor component 814 may include a proximity sensor configured to detect the presence of nearby objects without any physical contact. The sensor component 814 may further include an optical sensor such as a CMOS or CCD image sensor which is used in an imaging application. In some embodiments, the sensor component 814 may further include an acceleration sensor, a gyroscope sensor, a magnetic sensor, a pressure sensor or a temperature sensor.

The communication component 816 is configured to facilitate the communication in a wire or wireless manner between the electronic device 800 and other devices. The electronic device 800 may access a wireless network based on communication standards, such as WiFi, 2G or 3G, or a combination thereof. In an exemplary embodiment, the communication component 816 receives a broadcast signal or broadcast related personnel information from an external broadcast management system via a broadcast channel. In an exemplary embodiment, the communication component 816 further includes a near field communication (NFC) module to promote the short range communication. For example, the NFC module may be implemented on the basis of radio frequency identification (RFID) technology, infrared data association (IrDA) technology, ultrawide band (UWB) technology, Bluetooth (BT) technology and other technologies.

In exemplary embodiments, the electronic device 800 may be implemented by one or more application dedicated integrated circuits (ASIC), digital signal processors (DSP), digital signal processing device (DSPD), programmable logic device (PLD), field programmable gate array (FPGA), controllers, microcontrollers, microprocessors or other electronic elements and is used to execute the above method.

In an exemplary embodiment, there is further provided a non-volatile computer readable storage medium, such as a memory 804 including computer program instructions. The computer program instructions may be executed by a processor 820 of an electronic device 800 to implement the above method.

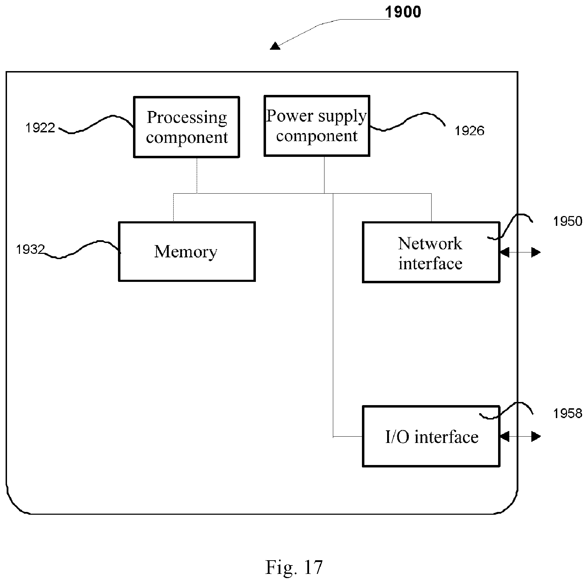

FIG. 17 is a block diagram of an electronic device 1900 according to an embodiment of the present disclosure. For example, the electronic device 1900 may be provided as a server. Referring to FIG. 17, the electronic device 1900 includes a processing component 1922, and further includes one or more processors and memory resources represented by a memory 1932 and configured to store instructions executed by the processing component 1922, such as an application program. The application program stored in the memory 1932 may include one or more modules each corresponding to a group of instructions. Furthermore, the processing component 1922 is configured to execute the instructions so as to execute the above method.

The electronic device 1900 may further include a power supply component 1926 configured to perform power supply management on the electronic device 1900, a wire or wireless network interface 1950 configured to connect the electronic device 1900 to a network, and an input/output (I/O) interface 1958. The electronic device 1900 may run an operating system stored in the memory 1932, such as Windows ServerTM, Mac OS XTM, UnixTM, LinuxTM, FreeBSDTM or the like.

In an exemplary embodiment, there is further provided a non-volatile computer readable storage medium, such as a memory 1932 including computer program instructions. The computer program instructions may be executed by a processing module 1922 of an electronic device 1900 to execute the above method.

The present disclosure may be implemented by a system, a method, and/or a computer program product. The computer program product may include a computer readable storage medium having computer readable program instructions for causing a processor to carry out the aspects of the present disclosure stored thereon.

The computer readable storage medium may be a tangible device that may retain and store instructions used by an instruction executing device. The computer readable storage medium may be, but not limited to, e.g., electronic storage device, magnetic storage device, optical storage device, electromagnetic storage device, semiconductor storage device, or any proper combination thereof. A non-exhaustive list of more specific examples of the computer readable storage medium includes: portable computer diskette, hard disk, random access memory (RAM), read-only memory (ROM), erasable programmable read-only memory (EPROM or Flash memory), static random access memory (SRAM), portable compact disc read-only memory (CD-ROM), digital versatile disk (DVD), memory stick, floppy disk, mechanically encoded device (for example, punch-cards or raised structures in a groove having instructions recorded thereon), and any proper combination thereof. A computer readable storage medium referred herein should not to be construed as transitory signal per se, such as radio waves or other freely propagating electromagnetic waves, electromagnetic waves propagating through a waveguide or other transmission media (e.g., light pulses passing through a fiber-optic cable), or electrical signal transmitted through a wire.

Computer readable program instructions described herein may be downloaded to individual computing/processing devices from a computer readable storage medium or to an external computer or external storage device via network, for example, the Internet, local region network, wide region network and/or wireless network. The network may include copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium in the respective computing/processing devices.

Computer readable program instructions for carrying out the operation of the present disclosure may be assembler instructions, instruction-set-architecture (ISA) instructions, machine instructions, machine-related instructions, microcode, firmware instructions, state-setting data, or source code or object code written in any combination of one or more programming languages, including an object oriented programming language, such as Smalltalk, C++ or the like, and the conventional procedural programming languages, such as the "C" programming language or similar programming languages. The computer readable program instructions may be executed completely on the user's computer, partly on the user's computer, as a stand-alone software package, partly on the user's computer and partly on a remote computer, or completely on a remote computer or a server. In the scenario with remote computer, the remote computer may be connected to the user's computer through any type of network, including local region network (LAN) or wide region network (WAN), or connected to an external computer (for example, through the Internet connection from an Internet Service Provider). In some embodiments, electronic circuitry, such as programmable logic circuitry, field-programmable gate arrays (FPGA), or programmable logic arrays (PLA), may be customized from state information of the computer readable program instructions; and the electronic circuitry may execute the computer readable program instructions, so as to achieve the aspects of the present disclosure.

Aspects of the present disclosure have been described herein with reference to the flowchart and/or the block diagrams of the method, device (systems), and computer program product according to the embodiments of the present disclosure. It will be appreciated that each block in the flowchart and/or the block diagram, and combinations of blocks in the flowchart and/or block diagram, may be implemented by the computer readable program instructions.

These computer readable program instructions may be provided to a processor of a general purpose computer, a dedicated computer, or other programmable data processing devices, to produce a machine, such that the instructions create means for implementing the functions/acts specified in one or more blocks in the flowchart and/or block diagram when executed by the processor of the computer or other programmable data processing devices. These computer readable program instructions may also be stored in a computer readable storage medium, wherein the instructions cause a computer, a programmable data processing device and/or other devices to function in a particular manner, such that the computer readable storage medium having instructions stored therein includes a product that includes instructions implementing aspects of the functions/acts specified in one or more blocks in the flowchart and/or block diagram.

The computer readable program instructions may also be loaded onto a computer, other programmable data processing devices, or other devices to have a series of operational steps performed on the computer, other programmable devices or other devices, so as to produce a computer implemented process, such that the instructions executed on the computer, other programmable devices or other devices implement the functions/acts specified in one or more blocks in the flowchart and/or block diagram.

The flowcharts and block diagrams in the drawings illustrate the architecture, function, and operation that may be implemented by the system, method and computer program product according to the various embodiments of the present disclosure. In this regard, each block in the flowchart or block diagram may represent a part of a module, a program segment, or a part of code, which includes one or more executable instructions for implementing the specified logical function(s). In some alternative implementations, the functions denoted in the blocks may occur in an order different from that denoted in the drawings. For example, two contiguous blocks may, in fact, be executed substantially concurrently, or sometimes they may be executed in a reverse order, depending upon the functions involved. It will also be noted that each block in the block diagram and/or flowchart, and combinations of blocks in the block diagram and/or flowchart, may be implemented by dedicated hardware-based systems performing the specified functions or acts, or by combinations of dedicated hardware and computer instructions.

Although the embodiments of the present disclosure have been described above, it will be appreciated that the above descriptions are merely exemplary, but not exhaustive; and that the disclosed embodiments are not limiting. A number of variations and modifications may occur to one skilled in the art without departing from the scopes and spirits of the described embodiments. The terms in the present disclosure are selected to provide the best explanation on the principles and practical applications of the embodiments and the technical improvements to the arts on market, or to make the embodiments disclosed herein understandable to one skilled in the art.

## Claims

1. An image processing method, comprising:

   in response to a makeup operation on a facial image to be processed, generating, based on a selected first target material, a second target material matching a target part in the facial image to be processed;
   determining, based on the second target material, an image area in the facial image to be processed where the target part is located; and
   performing, based on a color of the second target material, a color fusion treatment on the image area where the target part is located, to obtain a fused facial image.

2. The method according to claim 1, further comprising:

   identifying the target part in the facial image to be processed to obtain an initial position of the target part in the facial image to be processed; wherein
   said generating, based on the selected first target material, the second target material matching the target part in the facial image to be processed comprises:

      fusing the selected first target material with a target part in a preset facial image to obtain a standard material image; and
      extracting the second target material from the standard material image based on the initial position.

3. The method according to claim 2, wherein said identifying the target part in the facial image to be processed to obtain the initial position of the target part in the facial image to be processed comprises:

   acquiring at least one facial key point in the facial image to be processed;
   constructing in the facial image to be processed a triangular mesh corresponding to the target part based on the facial key point; and
   determining the initial position of the target part in the facial image to be processed based on position coordinates of the triangular mesh.

4. The method according to any one of claims 1-3, wherein said determining, based on the second target material, the image area in the facial image to be processed where the target part is located comprises:
   determining the image area in the facial image to be processed where the target part is located based on a transparency of at least one pixel in the second target material.

5. The method according to claim 4, wherein said determining the image area in the facial image to be processed where the target part is located based on the transparency of at least one pixel in the second target material comprises:
   in response to the transparency of a pixel in the second target material being within a preset transparency range, adopting an area in the facial image to be processed corresponding to a position of the pixel as the image area where the target part is located.

6. The method according to any one of claims 1-5, wherein said performing, based on the color of the second target material, the color fusion treatment on the image area where the target part is located to obtain the fused facial image comprises:

   acquiring an original color of the target part;
   performing a first fusion of the original color and the color of the second target material based on a selected treatment type in the makeup operation to obtain an initial fused facial image, wherein a color of the target part in the initial fused facial image is an initial fused color; and
performing a second fusion of the original color and the initial fused color to obtain the fused facial image.

7. The method according to claim 6, wherein the treatment type comprises one or more of eye makeup treatment, blush treatment, or eyebrow treatment; and
said performing the first fusion of the original color and the color of the second target material based on the selected treatment type in the makeup operation to obtain the initial fused facial image comprises:
fusing the original color with the color of the second target material via multiply blend to obtain the initial fused facial image.

8. The method according to claim 6 or 7, wherein the treatment type comprises a facial contouring treatment; and
said performing the first fusion of the original color and the color of the second target material based on the selected treatment type in the makeup operation to obtain the initial fused facial image comprises:
fusing the original color with the color of the second target material via soft light to obtain the initial fused facial image.

9. The method according to any one of claims 6-8, wherein said performing the second fusion of the original color and the initial fused color to obtain the fused facial image comprises:

determining respectively a fusing weight of the original color and a fusing weight of the initial fused color based on the transparency of at least one pixel in the second target material and a preset fusing intensity; and
fusing the original color with and the initial fused color based on the respective fusing weights to obtain the fused facial image.

10. The method according to any one of claims 1-9, wherein the first target material comprises one or more of an eyelash material, an eyeliner material, an eye shadow material, a blush material, an eyebrow material, or a facial contouring material.

11. An image processing apparatus, comprising:

a material generating module, configured to, in response to a makeup operation on a facial image to be processed, generate, based on a selected first target material, a second target material matching a target part in the facial image to be processed;
a target part determining module, configured to determine, based on the second target material, an image area in the facial image to be processed where the target part is located; and
a fusing module, configured to perform, based on a color of the second target material, a color fusion treatment on the image area where the target part is located, to obtain a fused facial image.

12. An electronic device, comprising:

a processor; and
a memory storing processor executable instructions,
wherein the processor is configured to call the instructions stored in the memory to execute the method according to any one of claims 1-10.

13. A computer readable storage medium having computer program instructions stored thereon, wherein the computer program instructions, when executed by a processor, implement the method according to any one of claims 1-10.

14. A computer program, comprising computer readable codes, or a nonvolatile computer readable storage medium carrying the computer readable codes, wherein when the computer readable codes run in a processor of an electronic device, the processor in the electronic device executes the method for implementing any one of claims 1-10.

S11

In response to a makeup operation on a facial image to be processed, generating, based on a selected first target material, a second target material matching a target part in the facial image to be processed

S12

Determining, based on the second target material, an image area in the facial image to be processed where the target part is located

S13

Performing, based on a color of the second target material, a color fusion treatment on the image area where the target part is located, to obtain a fused facial image

Fig. 1

Fig. 2

Fig. 3

Fig. 4

Fig. 5

Fig. 6

Fig. 7

Fig. 8

Fig. 9

Fused with an eyelash
material, an eyeliner
material and an eye
shadow material

Fig. 10

Fused with a
blush material

Fig. 11

Fused with an
eyebrow material

Fig. 12

Fused with a facial
contouring material

Fig. 13

Image processing apparatus 20

21          22          23

| Material generating module | Target part determining module | Fusing module |

Fig. 14

S31

Placing an original makeup material serving as a first target material at a position of a corresponding target part in a preset facial image to obtain a standard material image

S32

Determining a facial key point by identifying a key point in a facial image to be processed, and constructing a triangular mesh of a face area in the facial image to be processed with the facial key point and points from an interpolation on the facial key point

S33

Determining position coordinates of the target part in the facial image to be processed based on the triangular mesh corresponding to the facial key point to sample the standard material image, thereby acquiring a second target material

S34

Determining an image area where the target part is located in the facial image to be processed based on the second target material

S35

In a case where the first target material is an eye makeup material, a blush material or an eyebrow material, fusing an original color of the image area where the target part is located in the facial image to be processed with a color of a pixel at a corresponding position in the second target material via multiply blend to obtain an initial fused facial image having an initial fused color

S36

In a case where the first target material is a facial contouring material, fusing an original color of the image area where the target part is located in the facial image to be processed with a color of a pixel at a corresponding position in the second target material via soft light to obtain an initial fused facial image having an initial fused color

S37

Determining a fusing intensity for the initial fused color and the original color based on transparency of the second target material and a preset fusing intensity, and fusing the initial fused color of the area where the target part is located with the original color based on the fusing intensity to obtain the fused facial image

Fig. 15

Fig. 16

**1900**

Fig. 17

## INTERNATIONAL SEARCH REPORT

| International application No. |
|---|
| **PCT/CN2021/103246** |

**A. CLASSIFICATION OF SUBJECT MATTER**

G06K 9/00(2006.01)i;  G06K 9/46(2006.01)i;  G06K 9/62(2006.01)i;  G06T 5/00(2006.01)i

According to International Patent Classification (IPC) or to both national classification and IPC

**B. FIELDS SEARCHED**

Minimum documentation searched (classification system followed by classification symbols)

G06K,G06T

Documentation searched other than minimum documentation to the extent that such documents are included in the fields searched

Electronic data base consulted during the international search (name of data base and, where practicable, search terms used)

CNPAT, CNKI, WPI, EPODOC: 人脸, 图像, 妆容, 美颜, 渲染, 美妆, 素材, 模板, 样本, 颜色, 融合, face, image, fusion, material, color, mapping, target, organic, combination, key, point, matched with

**C. DOCUMENTS CONSIDERED TO BE RELEVANT**

| Category* | Citation of document, with indication, where appropriate, of the relevant passages | Relevant to claim No. |
|---|---|---|
| PX | CN 112766234 A (BEIJING SENSETIME TECHNOLOGY DEVELOPMENT CO., LTD.) 07 May 2021 (2021-05-07)<br>  claims 1-13 | 1-14 |
| X | CN 109859098 A (SHENZHEN CLOUDREAM TECHNOLOGY CO., LTD.) 07 June 2019 (2019-06-07)<br>  description, paragraphs [0055]-[0155], and figures 1-9 | 1, 6-14 |
| A | CN 111783511 A (BEIJING WODONG TIANJUN INFORMATION TECHNOLOGY CO., LTD. et al.) 16 October 2020 (2020-10-16)<br>  entire document | 1-14 |
| A | CN 111063008 A (BEIJING DAJIA INTERCONNECTION INFORMATION TECHNOLOGY CO., LTD.) 24 April 2020 (2020-04-24)<br>  entire document | 1-14 |
| A | CN 109325988 A (TENCENT TECHNOLOGY SHENZHEN CO., LTD.) 12 February 2019 (2019-02-12)<br>  entire document | 1-14 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 October 2021** | **28 October 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2021/103246**

### C. DOCUMENTS CONSIDERED TO BE RELEVANT

| Category* | Citation of document, with indication, where appropriate, of the relevant passages | Relevant to claim No. |
|---|---|---|
| A | CN 111563855 A (BAIDU ONLINE NETWORK TECHNOLOGY (BEIJING) CO., LTD.) 21 August 2020 (2020-08-21) entire document | 1-14 |

Form PCT/ISA/210 (second sheet) (January 2015)

**INTERNATIONAL SEARCH REPORT**
Information on patent family members

| International application No. |
| --- |
| **PCT/CN2021/103246** |

| Patent document cited in search report | | | Publication date (day/month/year) | Patent family member(s) | | | Publication date (day/month/year) |
| --- | --- | --- | --- | --- | --- | --- | --- |
| CN | 112766234 | A | 07 May 2021 | None | | | |
| CN | 109859098 | A | 07 June 2019 | None | | | |
| CN | 111783511 | A | 16 October 2020 | None | | | |
| CN | 111063008 | A | 24 April 2020 | None | | | |
| CN | 109325988 | A | 12 February 2019 | US | 11030439 | B2 | 08 June 2021 |
| | | | | US | 2020167550 | A1 | 28 May 2020 |
| | | | | WO | 2019024751 | A1 | 07 February 2019 |
| | | | | JP | 2020529068 | A | 01 October 2020 |
| | | | | KR | 20200027030 | A | 11 March 2020 |
| CN | 111563855 | A | 21 August 2020 | KR | 2021070377 | A | 14 June 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110204094